# EUROPÄISCHE PATENTSCHRIFT

(11) **EP 0 582 804 B1**
(45) Veröffentlichungstag und Bekanntmachung des Hinweises auf die Patenterteilung: **25.09.1996**
(21) Anmeldenummer: 93109260.5
(22) Anmeldetag: 09.06.1993
(51) Int. Cl.: F16H 63/20

(54) **Schalteinrichtung für ein Getriebe**
Shifting mechanism for a transmission
Mécanisme de changement de vitesse pour une boîte de vitesses

(30) Priorität: 10.08.1992 DE 4226400
(43) Veröffentlichungstag der Anmeldung: 16.02.1994
(73) Patentinhaber: Volkswagen Aktiengesellschaft, 38436 Wolfsburg (DE)
(72) Erfinder: Witte, Gerhard, Dipl.-Ing., D-3180 Wolfsburg 27 (DE); Götz, Andreas, Dipl.-Ing., D-3170 Gifhorn (DE)

(56) Entgegenhaltungen:
- EP-A- 0 219 957
- EP-A- 0 394 556
- EP-A- 0 413 047
- WO-A-85/04230
- US-A- 4 605 109
- US-A- 4 660 433

## Beschreibung

Die Erfindung betrifft eine Schalteinrichtung für ein Getriebe gemäß dem Oberbegriff des Patentanspruchs 1.

Eine gattungsbildende Schalteinrichtung ist bekannt geworden aus der WO-A-8504230. Dort ist innerhalb eines Getriebegehäuses eine durch einen Gangwählhebel betätigbare Schaltwelle zur Erzeugung von Gangeinlegebewegungen verdreh- und verschiebbar. Auf der Schaltwelle ist als Anschlagmittel ein Schaltfinger befestigt, dessen Bewegungen durch eine gehäusefeste Schaltkulisse geführt und begrenzt werden. Auch die EP-A-O 219 957 zeigt eine Schalteinrichtung mit einer Schaltwelle, die verdreh- und verschiebbar ist. Deren Bewegungen erfolgen innerhalb eines an dem Getriebegehäuse anflanschbaren Schaltgehäuses. Auf der Schaltwelle sind Anschlagmittel vorgesehen, die an dem Schaltgehäuse zur Anlage gebracht werden können und auf diese Weise eine eindeutige Begrenzung der Schaltwellenlängsverschiebung gewährleisten. Es ergibt sich für diese Schalteinrichtung jedoch eine große axiale Baulänge, weil alle für die Schaltwellenbetätigung wichtigen Funktionen wie Lagerung, Axialanschlag und Dreharretierung hintereinander angeordnet sind. Gerade in Fahrzeugen, deren im wesentlichen aus Motor und Getriebe bestehendes Antriebsaggregat quer zur Fahrtrichtung angeordnet ist, kann eine derartig ausgebildete Schalteinrichtung aufgrund der beengten räumlichen Verhältnisse am Getriebe nicht angeflanscht werden.

Ebenfalls zu großen axialen Baulängen führen Konzeptionen, wie sie beispielsweise aus der DE-C-37 04 928 und der DE-A-40 20 160 bekannt sind. Mit der gattungsbildenden Schalteinrichtung ist diesen die Tatsache gemeinsam, daß der Schaltwelle selbst kein eindeutiger Anschlag zur Begrenzung der Schaltwellenlängsverschiebung zugeordnet ist. Deshalb besteht in erhöhtem Maße die Gefahr von Fehlschaltungen, wenn außerhalb des Schaltgehäuses - beispielsweise am Gangstufenwählhebel - Anschläge zur eindeutigen Bestimmung der Schaltgassenwahl vorgesehen werden. Aufgrund von Ungenauigkeiten bei der Fertigung oder der Montage einzelner Elemente der Schalteinrichtung können sich nämlich Abweichungen von den ursprünglich vorgesehenen Begrenzungen ergeben. Diese Abweichungen können mit fortschreitender Betriebsdauer noch zunehmen.

Wie die EP-A-0 219 957 zeigt auch die EP-A-0 395 241 eine Schaltwelle mit Anschlagflächen, die direkt das Schaltgehäuse beaufschlagen. Die hydraulisch betätigte Schaltwelle ist gemäß der letztgenannten Schrift mit Wellenabsätzen versehen, die einerseits zur Anlage an dem Schaltgehäuse und andererseits zur Aufnahme verschiedener Schaltgabeln ausgebildet sind. Durch konusartige Übergangsbereiche an den Anschlagstellen der Schaltwellen wird aber auch bei einer solchen Einrichtung die axiale Baulänge merklich vergrößert.

Vor diesem Hintergrund liegt der Erfindung die Aufgabe zugrunde, die vorstehend genannten Nachteile des Standes der Technik zu vermeiden und eine besonders kompakte Bauweise für gattungsgemäße Schalteinrichtungen zu ermöglichen.

Diese Aufgabe wird gelöst mit einer Schalteinrichtung gemäß den Merkmalen des Patentanspruchs 1. Die Unteransprüche enthalten zweckmäßige Weiterbildungen der Erfindung.

Erfindungsgemäß stellen also die die Schaltwelle aufnehmenden Lagerschalen innerhalb des die Schalteinrichtung aufnehmenden Schaltgehäuses die Gegenfläche für die Anschlagmittel dar. Es liegt also eine Integration der Funktionen Lagerung und Begrenzung des Schaltweges vor.

Hervorzuheben ist auch, daß das die Begrenzung der Schaltwellenverschiebung bewirkende Anschlagmittel mit einem Profil versehen ist, welches den Eingriff einer Arretiervorrichtung zur Festlegung der Schaltwelle in einer bestimmten Drehstellung ermöglicht. Auf diese Weise sind auch hier in einem Bauteil zwei Funktionen integriert, und zwar die Begrenzung der Längsverschiebung einerseits und die Fixierung der Drehstellungen andererseits. Durch diese Funktionsintegration sowie durch eine überlappende Anordnung von wenigstens zwei der Funktionseinheiten Lagerschalen, Anschlagmittel und Arretiervorrichtung kann die axiale Baulänge der Schaltwelle entscheidend verkürzt werden.

Die Überlappung in Richtung der Drehachse der Schaltwelle ermöglicht eine äußerst gedrungene Bauweise und den Einbau der erfindungsgemäßen Schalteinrichtung unter räumlich extrem beengten Verhältnissen.

Besondere Vorteile der erfindungsgemäßen Lösung sind auch darin zu sehen, daß aufgrund der geringen Baugröße eine deutliche Gewichtsreduzierung gegenüber herkömmlichen Schalteinrichtungen erzielt werden kann. Die damit einhergehenden Materialeinsparungen wirken sich darüber hinaus sehr kostensenkend aus. Ferner ist noch bemerkenswert, daß mit der erfindungsgemäßen Schalteinrichtung eine komplett vormontierbare Baueinheit geschaffen werden kann, die ohne zusätzliche Einstellarbeiten verbaut werden kann.

In der Zeichnung ist ein besonders vorteilhaftes Ausführungsbeispiel der Erfindung dargestellt. Es zeigt
- Figur 1:: in einem Längsschnitt eine erfindungsgemäße Schalteinrichtung,
- Figur 2:: eine vorteilhafte Weiterbildung der Schalteinrichtung gemäß Figur 1.
Gleiche Bauteile sind in beiden Figuren gleich beziffert.

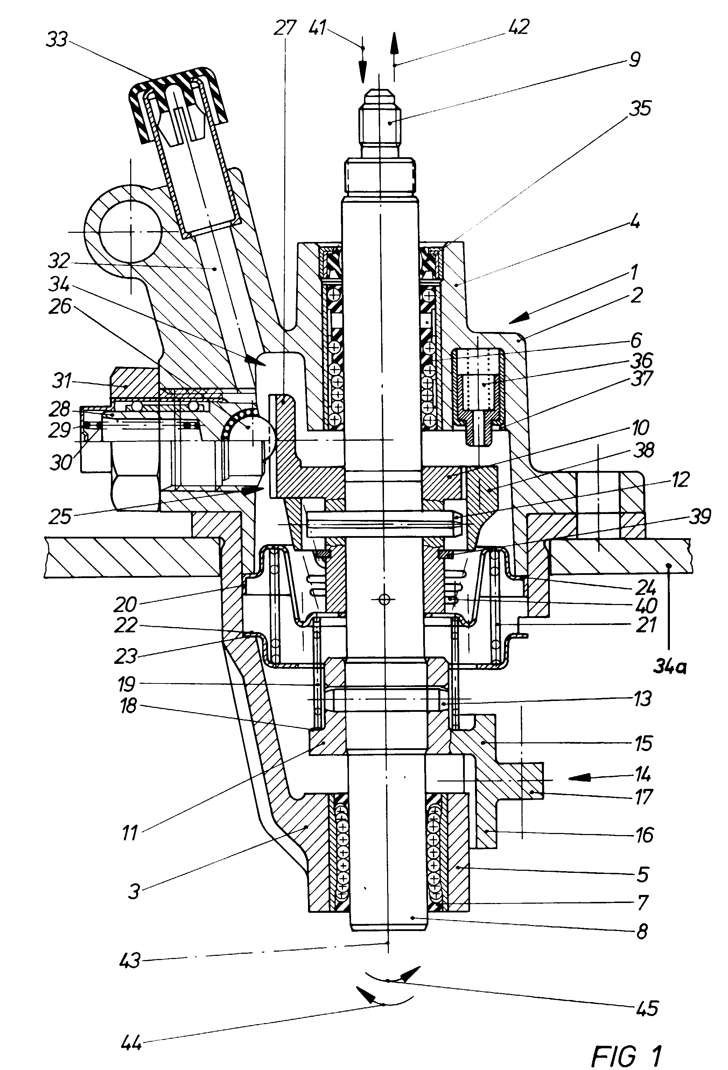

Man erkennt in Figur 1 für eine hier nicht weiter bezifferte Schalteinrichtung ein insgesamt mit 1 bezeichnetes Schaltgehäuse, das hier zweiteilig ausgeführt ist mit einem Oberteil 2 und einem Unterteil 3. In einer oberen Lagerschale 4 ist ein vorzugsweise als Linearlager oder Kegelhülse ausgeführtes Lager 6 und in der unteren Lagerschale 5 ein vorzugsweise als Linearlager oder Kegelhülse ausgeführtes Lager 7 angeordnet. Die Lager 6 und 7 können auch einfache Gleitlager sein. In den Lagern 6 und 7 ist eine Schaltwelle 8 längs- und drehverschiebbar. Diese ist an einem oberen Ende 9 entweder direkt oder aber über einen Übertragungsmechanismus mit einem hier nicht weiter dargestellten Gangstufen-Wählhebel verbindbar. Ferner sind auf der Schaltwelle 8 ein erstes Anschlagmittel 10 und ein zweites Anschlagmittel 11 befestigt. Diese Befestigung kann wahlweise durch einen Schrumpfsitz, einen Spannstift, eine Keilverzahnung oder eine Paßfeder sichergestellt werden. Im vorliegenden Falle werden die Anschlagmittel 10 und 11 sowohl gegen axiale Verschiebung als auch zur Verhinderung einer relativen Drehbewegung zur Schaltwelle 8 durch Spannstifte 12 und 13 gesichert. Das zweite Anschlagmittel 11 ist hier mit einer Betätigungseinrichtung 14 materialeinheitlich verbunden, deren wesentliche Elemente an sich bekannte Sperrflächen 15 und 16 sind, zwischen denen ein Schaltfinger 17 angeordnet ist, durch den hier nicht weiter dargestellte Schalthebel zur Betätigung der im Getriebe formschlüssig miteinander zu verbindenden Getriebeteile verschwenkbar sind. Das zweite Anschlagmittel 11 ist mit einer Federsitzfläche 18 versehen, an der eine erste Rückstellfeder 19 abstützbar ist. Durch diese erste Rückstellfeder 19 ist ein erster Federtopf 20 beaufschlagbar, der seinerseits am ersten Anschlagmittel 10 abstützbar ist und eine zweite Rückstellfeder 21 aufnimmt. Diese wiederum ist abstützbar an einem zweiten Federtopf 22, der lose auf einem umlaufenden Gehäuseabsatz 23 aufliegt. Der erste Federtopf 20 liegt auf einer Ringschulter 24 des Gehäuseoberteils 2 lose auf und ist im Gehäuseunterteil 3 axial verschiebbar. Hervorzuheben ist in diesem Zusammenhang, daß hier die Ringschulter 24 sowohl eine Zentrierung des Gehäuseoberteils 2 als auch einen eindeutigen Anschlag für den zweiten Federtopf 20 darstellt. Durch diese Funktionsintegration werden zur Fixierung des zweiten Federtopfs 20 keine zusätzlichen Halteelemente benötigt. Zugleich entfallen die für die Unterbringung der Halteelemente erforderlichen Ausnehmungen im Schaltgehäuse, so daß nur ein Minimum an spanender Bearbeitung an den Gehäuseteilen 2 und 3 erforderlich ist.

Ein weiteres wesentliches Element der erfindungsgemäßen Schalteinrichtung ist eine insgesamt mit 25 bezeichnete Arretiervorrichtung, deren wesentliche Elemente ein hier kugelförmig ausgebildetes Rastglied 26 und ein mit dem ersten Anschlagmittel 10 materialeinheitlich verbundenes Wellenprofil 27 sind. Das Rastglied 26 ist seinerseits in einer Gleithülse 28 kugelgelagert, die ihrerseits durch eine gegen einen Deckel 29 vorgespannte Druckfeder 30 beaufschlagt wird. Sämtliche dem Rastglied 26 zugeordnete Bauelemente sind innerhalb einer Gewindehülse 31 angeordnet und ebenfalls als komplett vormontierbare Baueinheit in das Gehäuseoberteil 2 einschraubbar.

Bei einem in der Zeichnung nicht dargestellten Ausführungsbeispiel weist das erste Anschlagmittel 10 zusätzlich ein zweites Wellenprofil auf, das im wesentlichen senkrecht zum Wellenprofil 27 verläuft und eine Arretierung der Schaltwelle 8 in den verschiedenen Schiebestellungen sicherstellt.

Über eine Entlüftungsöffnung 32 und einen Ölabscheider 33 kann der durch Erwärmung des Getriebes entstehende Luftdruck abgebaut werden. Eine innenseitige Mündung 34 der Entlüftungsöffnung 32 ist hier in direkter Nachbarschaft zur Lagerschale 4 und der Arretiervorrichtung 25 angeordnet. Auch diese konstruktive Maßnahme trägt zur kompakten Bauweise der gesamten Schalteinrichtung 1 bei.

Die gesamte Schalteinrichtung 1 ist an einem hier nur ausschnittsweise dargestellten Getriebegehäuse 34a anflanschbar, und zwar vorzugsweise durch Schraubenverbindungen. Das untere Gehäuseteil 3 ist gegenüber dem Getriebeinneren geöffnet und wird so ebenfalls mit Schmieröl versorgt. Die Abdichtung der Schalteinrichtung 1 nach außen erfolgt über ein Dichtelement 35, das in der oberen Lagerschale 4 eingesetzt ist und über hier nicht weiter bezifferte Dichtlippen die Schaltwelle 8 beaufschlagt.

In ebenfalls platzsparender Bauweise ist im Bereich der Lagerschale 4 neben dem Lager 6 ein federbelastetes Sperrglied 36 in einer Gehäusebohrung 37 durch Preßsitz gehalten. Durch dieses Sperrglied 36 ist eine Sperrscheibe 38 beaufschlagbar, die durch einen Klemmring 39 am ersten Anschlagmittel 10 befestigt ist. Die durch eine Drehfeder 40 beaufschlagbare Sperrscheibe 38 stellt sicher, daß vom fünften Gang nicht direkt in den Rückwärtsgang geschaltet werden kann. Die Anordnung der Drehfeder 40 innerhalb der Rückstellfedern 19 und 21 führt gleichfalls zu einer kompakten Bauweise.

Schließlich sind mit 41 und 42 Richtungspfeile bezeichnet, mit deren Hilfe die Verschiebebewegungen der Schaltwelle 8 beschrieben werden sollen. Zur Beschreibung der Drehbewegung der Schaltwelle 8 um deren Rotationsachse 43 dienen darüber hinaus noch Drehrichtungspfeile 44 und 45.

Zur näheren Erläuterung der Funktion der erfindungsgemäßen Schalteinrichtung sei angenommen, daß an dem freien Ende 9 ein Gangstufen-Wählhebel angeordnet ist, der hier nach dem Prinzip der sogenannten "H-Schaltung" bedienbar ist. Bei der Anwahl verschiedener Schaltgassen wird über den Gangstufen-Wählhebel die Schaltwelle 8 aus ihrer in der Zeichnung dargestellten Grundstellung heraus für die Gänge 1/2 in Pfeilrichtung 41 und 5/R in Pfeilrichtung 42 verschoben. Die Grundstellung selbst ist den Gängen 3/4 zugeordnet. Die beim Einlegen des jeweils gewünschten Ganges vorgenommene Bewegung am Gangstufen-Wählhebel wird in der Schaltwelle 8 in Drehbewegungen gemäß der Pfeilrichtungen 44 und 45 um die Rotationsachse 43 umgesetzt. Dabei stellt in den jeweiligen Drehstellungen die Arretiervorrichtung 25 zusammen mit dem Wellenprofil 27 am ersten Anschlagmittel 10 sicher, daß die jeweils eingestellte Drehstellung der Schaltwelle 8 erhalten bleibt. Beim Umschalten in einen anderen Gang wird von den Bergen des Wellenprofils 27 die Rastkugel 26 entgegen der Druckfeder 30 nach oben bewegt, um dann bei fortschreitender Drehbewegung unter deren Rückstellkraft wieder in ein Tal zur Arretierung hineinbewegt zu werden.

Zur Anwahl der Schaltgasse 1/2 ist also die Schaltwelle 8 in Pfeilrichtung 41 zu bewegen. Dies hat zur Folge, daß vom ersten Anschlagmittel 10 über den zweiten Federtopf 22 die zweite Rückstellfeder 21 zusammengedrückt wird und so auf die Schaltwelle 8 gegen die Verschiebebewegung eine Rückstellkraft ausübt. Bei dieser Bewegung wird das erste Federelement 19 nicht weiter beeinflußt, weil das zweite Anschlagmittel 11 ebenfalls fest auf der Schaltwelle 8 sitzt und dementsprechend mitbewegt wird. Beim Einlegen des ersten oder zweiten Ganges bleibt dann die zweite Rückstellfeder 21 unter Vorspannung und ermöglicht eine selbsttätige Umstellung des Gangstufen-Wählhebels in die Grundstellung, wenn der erste oder zweite Gang herausgenommen wird. Für die zuvor beschriebene Schaltgassenwahl wird der Verschiebeweg der Schaltwelle 8 in Pfeilrichtung 41 begrenzt durch die - hier nicht weiter bezifferte - innere Stirnseite der Lagerschale 5. An dieser liegt die der Lagerschale 5 zugeordnete Stirnseite des zweiten Anschlagmittels 11 satt auf Dadurch wird über längere Betriebszeiten hinweg eine eindeutig reproduzierbare Begrenzung geschaffen.

Für eine Anwahl der Schaltgasse 5/R ist die Schaltwelle 8 in Pfeilrichtung 42 zu bewegen. In diesem Fall löst sich das erste Anschlagmittel 10 vom ersten Federtopf 20, welcher seinerseits aufgrund seiner Anlage an der Ringschulter 24 in seiner Stellung verharrt und damit eine Stauchung des ersten Federelementes 19 gegenüber dem zweiten Anschlagmittel 11 ermöglicht. In diesem Fall verbleibt die zweite Rückstellfeder 21 in ihrer Grundstellung. Beim Herausnehmen des fünften Ganges bzw. des Rückwärtsganges bewirkt die erste Rückstellfeder 19 in der zuvor schon für das Federelement 21 beschriebenen Weise die selbsttätige Rückstellung der Schaltwelle 8 in die Grundstellung. Auch für die Verschiebebewegung der Schaltwelle 8 in Pfeilrichtung 42 wird eine jederzeit reproduzierbare Begrenzung erhalten, weil die dem ersten Anschlagmittel 10 zugewandte Stirnseite der Lagerschale 4 satt durch das erste Anschlagmittel 10 beaufschlagbar ist. Die hier also innerhalb des Gehäuses 1 erfolgende Begrenzung des Schaltwellenweges ermöglicht eine besonders einfache Montage der gesamten Schalteinrichtung, weil außerhalb des Gehäuses 1 keinerlei Arbeiten zur Justierung der Begrenzung mehr nötig werden. Darüber hinaus kann die eingestellte Wegbegrenzung im Schaltgehäuse 1 und vor dessen Einbau in die gesamte Schalteinrichtung überprüft werden.

Das hier federbelastete Sperrglied 36 stellt im Zusammenwirken mit der Sperrscheibe 38 sicher, daß vom fünften Gang nicht direkt in den Rückwärtsgang geschaltet werden kann. Zu diesem Zweck besitzt die gegen den in der Schaltwelle 8 gehaltenen Spannstift 12 bewegbare Sperrscheibe 38 auf der der Lagerschale 4 zugewandten Stirnseite eine entsprechend ausgeformte Rampe (nicht dargestellt). Die zuvor beschriebene Sperrwirkung tritt ein, wenn das Sperrglied 36 nach einer Verdrehung der Schaltwelle 8 - und somit auch der Sperrscheibe 38 - hinter einer Sperrkante (hier nicht dargestellt) der Sperrscheibe 38 einrastet. In diesem Zustand ist ein Herausnehmen des fünften Ganges möglich, weil die Sperrscheibe 38 entgegen der Vorspannung der Drehfeder 40 bis zu einem von dem Spannstift 12 gebildeten Anschlag zurückgedreht werden kann. Dieser Anschlag stellt sicher, daß nicht direkt vom fünten Gang in den Rückwärtsgang durchgeschaltet werden kann. Um die Sperrwirkung wieder aufzuheben, muß allerdings die Schaltgasse 5/R verlassen werden. Erst aus der Grundstellung (Schaltgasse 3/4) heraus kann der Rückwärtsgang eingelegt werden.

Anstelle des hier gezeigten Zusammenspiels von Sperrglied 36, Sperrscheibe 38, Drehfeder 40 und Spannstift 12 kann auch ein manuell - beispielsweise mittels eines Zugringes am Getriebewählhebel - betätigbarer Sperrbolzen vorgesehen werden, der nach einer Bewegung in eine Sperrstellung für das Einlegen des Rückwärtsganges durch den Fahrzeugbediener aus der Sperrstellung herausgezogen werden muß. Die Integration einer solchen Zugringbetätigung in das Gehäuseoberteil 2 ermöglicht ebenfalls eine leichte Vormontierbarkeit und erlaubt demzufolge eine gute Abdichtung.

In einer nicht gezeigten Variante ist ein betätigbarer Sperrbolzen am Unterteil 3 des Schaltgehäuses 1 gehalten und kann direkt eine nicht dargestellte Schaltgabel des Rückwärtsganges beaufschlagen. Auf diese Weise wird die Summe der Fertigungstoleranzen auf ein Minimum reduziert, so daß bei einem Fünfganggetriebe ein ungewolltes Ansynchronisieren des Rückwärtsganges während einer beispielsweise vom 4. in den 5. Gang erfolgenden Schaltung sicher vermieden wird.

Im gleichen Sinne wirkt in einer weiteren nicht gezeigten Variante der betätigbare Sperrbolzen auf einen nach Art eines Schaltfingers ausgebildeten und den Gängen 5 und R zugeordneten Mitnehmer, der über die Schaltstange 8 mit der Schaltgabel 5/R verbindbar ist.

Wie bei der Sperrscheibe 38 können auch dem ersten Anschlagmittel 10 auf der der Lagerschale 4 zugewandten Stirnseite oder auf dem Umfang (dritter Teilabschnitt) Rampen zur Beaufschlagung wenigstens eines Betätigungsschalters vorgesehen werden. Durch einen solchen Betätigungsschalter können beispielsweise die Rückfahrscheinwerfer eines Fahrzeuges und ergänzend oder alternativ Beleuchtungsanzeigen für die jeweils gewählte Schaltgasse und/oder den jeweils eingelegten Gang eingeschaltet werden. Eine solche Gangerkennung ist auch nutzbar für eine gemeinsame Steuerung des Getriebes und eines ihm vorgeschalteten Motors.

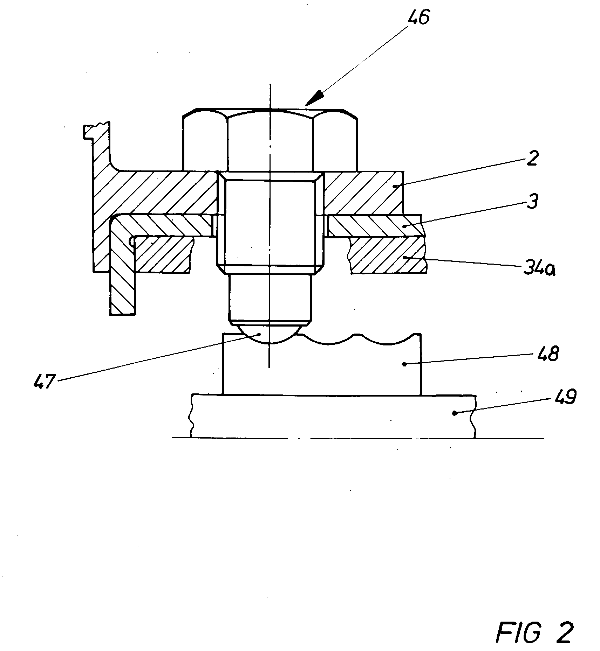

Figur 2 zeigt eine zweite Arretiervorrichtung 46, deren Aufbau und Funktionsweise der Arretiervorrichtung 25 prinzipiell gleicht, vorzugsweise sogar mit dieser identisch ist. Die Arretiervorrichtung 46 ist in dem Gehäuseoberteil 2 vormontiert und greift durch das Gehäuseunterteil 3 hindurch mit einer federbelasteten Rastkugel 47 in ein zweites Wellenprofil 48 ein, das auf einer durch den Schaltfinger 17 bewegbaren Schaltschiene 49 befestigt ist. Durch die zweite Arretiervorrichtung 46 wird sichergestellt, daß die jeweils gewählten Getriebegänge auch eingelegt bleiben. Durch die hier vorgeschlagene Konfiguration sorgt die Arretiervorrichtung 46 außerdem dafür, daß der nicht weiter dargestellte Gangstufen-Wählhebel in seinen unterschiedlichen Positionen exakt fixiert wird. Bei dem Ausführungsbeispiel gemäß Figur 2 wird der Integrationsgrad des Schaltgehäuses 1 also noch weiter erhöht.

Hervorzuheben ist, daß die erfindungsgemäße Schalteinrichtung nicht auf die hier beschriebene Fünfgang-Schalteinrichtung beschränkt ist. Denkbar sind vielmehr auch Schalteinrichtungen mit mehr als drei Schaltgassen.

## Patentansprüche

1. Schalteinrichtung für ein Kraftfahrzeuggetriebe, mit einer Schaltwelle (8), die
- in Lagerschalen (4, 5) eines Gehäuses verdreh- und verschiebbar ist,
- mit einem Gangstufen-Wählhebel verbindbar ist,
wobei wenigstens ein erstes Anschlagmittel (10) auf der Schaltwelle (8) befestigt ist, welches zur Begrenzung einer mittels des Gangstufen-Wählhebels in einer ersten Richtung (42) bewirkten Schaltwellenverschiebung einen ersten Teilabschnitt aufweist, welcher sich in einer ersten dieser Schaltwellenverschiebung entsprechenden axialen Begrenzungslage der Schaltwelle (8) an einer gehäusefesten Abstützung (4) abstützt,
wobei das erste Anschlagmittel (10) einen zweiten Teilabschnitt (27) aufweist, der durch eine die Schaltwelle (8) in ihrer jeweils eingelegten Drehstellung haltende erste Arretiervorrichtung (25) beaufschlagt ist,
wobei eine (4) der Lagerschalen (4, 5) dem ersten Anschlagmittel (10) zugewandt ist und wobei die Funktionseinheiten Lagerschalen (4, 5), erstes Anschlagmittel (10) und erste Arretiervorrichtung (25) in der Weise angeordnet sind, daß wenigstens zwei von ihnen sich zumindest abschnittsweise in Richtung der Rotationsachse (43) der Schaltwelle (8) überlappen,
dadurch gekennzeichnet, daß
sich das erste Anschlagmittel (10) in der ersten axialen Begrenzungslage unmittelbar am Gehäuse an einer Stirnseite der dem ersten Anschlagmittel zugewandten Lagerschale (4) abstützt.

2. Schalteinrichtung nach Anspruch 1, dadurch gekennzeichnet, daß dem ersten Anschlagmittel (10) eine Sperrscheibe (38) zugeordnet ist, die gegen ein Sperrglied (36) festlegbar ist, welches zumindest abschnittsweise bezogen auf die Rotationsachse (43) der Schaltwelle (8) neben der dem ersten Anschlagmittel (10) zugewandten Lagerschale (4) angeordnet ist.

3. Schalteinrichtung nach einem der Ansprüche 1 und 2, dadurch gekennzeichnet, daß in dem Gehäuse (1) eine Entlüftungsöffnung (32) vorgesehen ist, deren innenseitige Mündung (34) im wesentlichen der dem ersten Anschlagmittel (10) zugewandten Lagerschale (4) zugewandt ist.

4. Schalteinrichtung nach einem der Ansprüche 1 bis 3, dadurch gekennzeichnet, daß ein zweites Anschlagmittel (11) auf der Schaltwelle (8) befestigt ist,
wobei eine (5) der Lagerschalen (4, 5) des Gehäuse dem zweiten Anschlagmittel (11) zugewandt ist,
wobei sich zur Begrenzung einer mittels des Gangstufen-Wählhebels in einer zweiten - der ersten Richtung (42) entgegengesetzten - Richtung (41) bewirkten Schaltwellenverschiebung das zweite Anschlagmittel (11) in einer zweiten, dieser Schaltwellenverschiebung entsprechenden axialen Begrenzungslage der Schaltwelle (8) unmittelbar am Gehäuse an einer Stirnseite der dem zweiten Anschlagmittel (11) zugewandten Lagerschale (5) abstützt,
wobei diesem zweiten Anschlagmittel (11) eine Betätigungseinrichtung (14) mit einem von Sperrflächen (15, 16) umgebenen Schaltfinger (17) zugeordnet ist, durch den Schalthebel zur Betätigung formschlüssig miteinander zu verbindender Getriebeteile verschwenkbar sind,
und wobei die Betätigungseinrichtung (14) und die dem zweiten Anschlagmittel (11) zugewandte Lagerschale (5) in Richtung der Rotationsachse (43) der Schaltwelle (8) zumindest abschnittsweise einander überlappend angeordnet sind.

5. Schalteinrichtung nach Anspruch 4, dadurch gekennzeichnet, daß für die Unterstützung der Bewegung der Schaltwelle (8) in eine Grundstellung an den Anschlagmitteln (10, 11) gegensinnig wirkende Rückstellfedern (19, 21) abstützbar sind, die sich zumindest abschnittsweise durchdringen.

6. Schalteinrichtung nach Anspruch 5, dadurch gekennzeichnet, daß innerhalb der Rückstellfedern (19, 21) eine die Drehbewegungen der Schaltwelle (8) mit Rückstellkraft beaufschlagende Drehfeder (40) angeordnet ist.

7. Schalteinrichtung nach einem der Ansprüche 1 bis 6, dadurch gekennzeichnet, daß das erste Anschlagmittel (10) einen dritten Teilabschnitt aufweist, durch den wenigstens ein Betätigungsschalter zur Aktivierung eines elektrischen Stromkreises beaufschlagbar ist.

8. Schalteinrichtung nach Anspruch 7, dadurch gekennzeichnet, daß der elektrische Stromkreis einem Rückfahrscheinwerfer zugeordnet ist.

9. Schalteinrichtung nach Anspruch 7, dadurch gekennzeichnet, daß der elektrische Stromkreis einer Schaltgassen-Anzeige zugeordnet ist.

10. Schalteinrichtung nach einem der Ansprüche 1 bis 9, dadurch gekennzeichnet, daß das die Schaltwelle und alle ihr zugeordneten Funktionseinheiten enthaltende Gehäuse (1) als vormontierbare Einheit an einem Getriebegehäuse anflanschbar ist.

11. Schalteinrichtung nach einem der Ansprüche 1 bis 10, dadurch gekennzeichnet, daß dem ersten Anschlagmittel (10) eine Sperrscheibe zugeordnet ist, in der ein manuell lösbarer Sperrbolzen arretierbar ist.

12. Schalteinrichtung nach einem der Ansprüche 1 bis 11, dadurch gekennzeichnet, daß dem Gehäuse (1) eine zweite Arrtiervorrichtung (46) zugeordnet ist, durch die wenigstens eine Schaltstange (46) und/oder Schaltgabel des Getriebes fixierbar ist.

## Claims

1. Shifting mechanism for a motor vehicle transmission, having a selector shaft (8), which
- is rotational and displaceable in bearing shells (4, 5) of a housing,
- can be connected to a gear selector lever,
wherein at least one first blocking means (10) is fixed on the selector shaft (8) and, in order to limit a selector shaft displacement effected by means of the gear selector lever in a first direction (42), comprises a first partial section which abuts against a support (4) fixed to the housing, when the selector shaft (8) is in a first axial limit position corresponding to this selector shaft displacement,
wherein the first blocking means (10) comprises a second partial section (27) which is acted upon by means of a first stop device (25) holding the selector shaft (8) in the rotational position in which it is placed,
wherein one (4) of the bearing shells (4, 5) faces the first blocking means (10) and wherein the function units: bearing shells (4, 5), first blocking means (10) and first stop device (25) are disposed in such a way that at least two of them overlap at least partially in the direction of the axis of rotation (43) of the selector shaft (8),
characterised in that
in the first axial limit position directly against the housing, the first blocking means (10) abuts against a front end of the bearing shell (4) facing the first blocking means.

2. Shifting mechanism according to claim 1, characterised in that a locking disc (38) is allocated to the first blocking means (10) and can be fixed against a locking member (36) which is disposed next to the bearing shell (4), which faces the first blocking means (10), at least partially in relation to the axis of rotation (43) of the selector shaft (8).

3. Shifting mechanism according to any of claims 1 and 2, characterised in that in the housing (1) a ventilation hole (32) is disposed of which the internal aperture (34) substantially faces the bearing shell (4) which faces the first blocking means (10).

4. Shifting mechanism according to any of claims 1 to 3, characterised in that a second blocking means (11) is fixed to the selector shaft (8),
wherein one (5) of the bearing shells (4, 5) of the housing faces the second blocking means (11),
wherein in order to limit a selector shaft displacement effected by means of the gear selector lever in a second direction (41) - opposite to the first direction (42) - the second blocking means (11) abuts directly against the housing on a front end of the bearing shell (5) facing the second blocking means (11) when the selector shaft (8) is in a second axial limit position corresponding to this selector shaft displacement,
wherein an actuating device (14) with a shift finger (17) surrounded by locking surfaces (15, 16) is allocated to this second blocking means (11), by means of which shift finger, levers for actuation of transmission parts, which are to be connected together in a form fit manner, can be pivoted, and wherein the actuating device (14) and the bearing shell (5) facing the second blocking means (11) are disposed at least partially overlapping each other in the direction of the axis of rotation (43) of the selector shaft (8).

5. Shifting mechanism according to claim 4, characterised in that to assist the movement of the selector shaft (8) into a basic position return springs (19, 21), which are effective in opposite directions, can bear against the blocking means (10, 11) and at least partially pass one inside the other.

6. Shifting mechanism according to claim 5, characterised in that inside the return springs (19, 21) is disposed a torsion spring (40) acting upon the rotational movements of the selector shaft (8) with a return force.

7. Shifting mechanism according to any of claims 1 to 6, characterised in that the first blocking means (10) comprises a third partial section through which at least one actuating switch for activation of an electrical circuit can be acted upon.

8. Shifting mechanism according to claim 7 characterised in that the electrical circuit is allocated to a reversing light.

9. Shifting mechanism according to claim 7, characterised in that the electrical circuit is allocated to a shifting channel indicator.

10. Shifting mechanism according to any of claims 1 to 9, characterised in that the housing (1) containing the selector shaft and all the function units associated therewith can be flange-mounted onto a transmission housing as a preassembled unit.

11. Shifting mechanism according to any of claims 1 to 10, characterised in that a locking disc is allocated to the first blocking means (10), in which disc a manually releasable locking pin can be locked.

12. Shifting mechanism according to any of claims 1 to 11, characterised in that a second stop device (46) is allocated to the housing (1), by means of which stop device at least one shift rod (46) and/or shift fork of the transmission can be fixed.

## Revendications

1. Dispositif de changement de vitesse pour une boîte de vitesse de véhicule à moteur, avec un axe de levier de commande du changement de vitesse (8), qui
- peut tourner et coulisser dans des coussinets de palier (4, 5) d'un carter,
- peut être relié à un levier de commande de changement de vitesse,
au moins un premier organe de butée (10) étant fixé sur l'axe du levier de commande de changement de vitesse (8), organe qui présente, pour limiter une translation de l'axe du levier de commande du changement de vitesse, provoquée au moyen du levier de commande du changement de vitesse dans une première direction (42), un premier secteur, qui prend appui, dans une première position axiale de limitation, correspondant à cette translation de l'axe du levier de commande du changement de vitesse, sur un appui (4) solidaire du carter, le premier organe de butée (10) présentant un second secteur (27), qui est sollicité par un premier dispositif de blocage (25) qui maintient l'axe du levier de commande du changement de vitesse (8) dans sa position de rotation respectivement enclenchée,
l'un des coussinets de palier (4, 5), le coussinet de palier (4), étant tourné vers le premier organe de butée (10) et les unités fonctionnelles constituées par les coussinets de palier (4, 5), le premier organe de butée (10) et le premier dispositif de blocage (25), étant disposées d'une manière telle qu'au moins deux d'entre elles se recouvrent au moins en partie dans le sens de l'axe de rotation (43) de l'axe du levier de commande du changement de vitesse (8), dispositif de changement de vitesse caractérisé en ce que le premier organe de butée (10) s'appuie dans la première position axiale de limitation directement sur le carter sur une face frontale du coussinet de palier (4), qui est tournée vers le premier organe de butée.

2. Dispositif de changement de vitesse selon la revendication 1, caractérisé en ce qu'une rondelle de blocage (38) est associée au premier organe de butée (10), rondelle de blocage qui peut être fixée contre un organe de blocage (36) qui est disposé au moins de façon fragmentaire par rapport à l'axe de rotation (43) de l'axe du levier de commande du changement de vitesse (8) à côté du coussinet de palier (4) tourné vers le premier organe de butée (10).

3. Dispositif de changement de vitesse selon l'une des revendications 1 et 2, caractérisé en ce que dans le carter (1) il est prévu un orifice de ventilation (32), dont l'embouchure située du côté intérieur (34) est essentiellement tournée vers le coussinet de palier (4), tourné vers le premier organe de butée (10).

4. Dispositif de changement de vitesse selon l'une des revendications 1 à 3, caractérisé en ce qu'un second organe de butée (11) est fixé sur l'axe du levier de commande du changement de vitesse (8),
l'un des coussinets de palier (4, 5) du carter, le coussinet (5) étant tourné vers le second organe de butée (11), le second organe de butée (11), pour limiter une translation de l'axe du levier de commande du changement de vitesse, provoquée au moyen du levier de commande du changement de vitesse dans une seconde direction (41) - en sens opposé à celui de la première direction (42) - prenant appui dans une deuxième position axiale de limitation de l'axe du levier de commande du changement de vitesse (8), correspondant à cette translation de l'axe du levier de commande du changement de vitesse, directement sur le carter, sur une face frontale du deuxième coussinet de palier (5) tourné vers le second organe de butée (11),
un dispositif d'actionnement (14), avec un doigt de commande (17) entouré par des surfaces de blocage (15, 16), étant associé à ce second organe de butée (11), doigt de commande au moyen duquel on peut faire pivoter des leviers de commande pour actionner des organes de transmission à relier ensemble par coopération de formes,
et le dispositif d'actionnement (14) et le coussinet de palier (5), tourné vers le second organe de butée (11), étant disposés en direction de l'axe de rotation (43) de l'axe du levier de commande du changement de vitesse (8) en se recouvrant au moins en partie l'un l'autre.

5. Dispositif de changement de vitesse selon la revendication 4, caractérisé en ce que, pour soutenir le mouvement de l'axe du levier de commande du changement de vitesse (8), des ressorts de rappel (19,21), qui agissent en sens opposés, peuvent prendre appui dans une position de base sur les organes de butée (10, 11), ressorts de rappel qui passent au moins en partie à travers l'un l'autre.

6. Dispositif de changement de vitesse selon la revendication 5, caractérisé en ce qu'à l'intérieur des ressorts de rappel (19, 21) on dispose un ressort de torsion (40) qui provoque les mouvements de rotation de l'axe du levier de commande du changement de vitesse (8) avec une force de rappel.

7. Dispositif de changement de vitesse selon l'une des revendications 1 à 6, caractérisé en ce que le premier organe de butée (10) présente un troisième secteur, par lequel au moins un interrupteur d'actionnement peut être sollicité pour activer un circuit électrique.

8. Dispositif de changement de vitesse selon la revendication 7, caractérisé en ce que le circuit électrique est associé à un phare de recul.

9. Dispositif de changement de vitesse selon la revendication 7, caractérisé en ce que le circuit électrique est associé à un indicateur de la vitesse enclenchée.

10. Dispositif de commande selon l'une des revendications 1 à 9, caractérisé en ce que l'axe du levier de commande du changement de vitesse (8) et le carter (1), qui contient toutes les unités fonctionnelles qui lui sont associées, peut être bridé, en tant qu'unité que l'on peut préassembler, sur un carter de boîte de vitesse.

11. Dispositif de changement de vitesse selon l'une des revendications 1 à 10, caractérisé en ce que l'on associe au premier organe de butée (10) une rondelle de blocage, dans laquelle on peut fixer un axe de blocage pouvant être desserré manuellement.

12. Dispositif de changement de vitesse selon l'une des revendications 1 à 11, caractérisé en ce que l'on associe au carter (1) un second dispositif de blocage (46) par lequel on peut fixer au moins une tige de commande (46) et/ou une fourchette de commande de la boîte de vitesse.
